# EUROPEAN PATENT APPLICATION

(11) **EP 4 389 701 A1**
(43) Date of publication of application: **26.06.2024**
(21) Application number: 22858553.5
(22) Date of filing: 16.08.2022
(51) Int. Cl.: C01B 32/28, B82Y 30/00, C01B 32/15, C08K 3/04, C08L 71/00

(54) **NANODIAMOND AQUEOUS DISPERSION**

(30) Priority: 20.08.2021 JP 2021135080
(71) Applicant: Daicel Corporation, Osaka 530-0011 (JP)
(72) Inventor: LIU, Ming, Tokyo 108-8230 (JP); YOSHIKAWA, Taro, Tokyo 108-8230 (JP); NISHIKAWA, Masahiro, Tokyo 108-8230 (JP); TAKAO, Naoki, Tokyo 108-8230 (JP)
(74) Representative: Grünecker Patent- und Rechtsanwälte PartG mbB
(86) International application number: PCT/JP2022/031474
(87) International publication number: WO 2023/022238

(57) **Abstract**

Provided is a nanodiamond aqueous dispersion in which nanodiamond particles can be present in water in a highly dispersed state. The nanodiamond aqueous dispersion includes water and nanodiamond particles dispersed in the water. A content of heavy metal is 1 part by mass or less with respect to 100 parts by mass of the nanodiamond particles. A horizontal projection area of the nanodiamond particles calculated from an analysis image obtained by low-temperature electron microscopy satisfies at least one condition selected from the group consisting of (a) to (d): (a) a percentage of 100 nm² or more is 20% or less, (b) a percentage of 80 nm² or more is 24% or less, (c) a percentage of 50 nm² or more is 30% or less, (d) a percentage of 30 nm² or more is 39% or less.

## Description

### Technical Field

The present disclosure relates to a nanodiamond aqueous dispersion including water and nanodiamond particles dispersed in the water. The present application claims priority to JP 2021-135080, filed in Japan on August 20, 2021, the contents of which are incorporated herein by reference.

### Background Art

Nano-sized fine substances such as nanocarbon materials are known to have novel characteristics that cannot be achieved in a bulk state. For example, among nanocarbon materials, graphite (formed of stacked layers of graphene) is a substance with a two-dimensional structure that has a large specific surface area and that exhibits excellent conductivity and excellent sensitivity to small molecules. For that reason, graphite has been used in various electrode materials. However, nanocarbon materials typically have large proportions of surface atoms, and it is known that a total van der Waals force that can act between surface atoms of adjacent particles is strong, and aggregation tends to occur. Thus, it has been very difficult to stably disperse nanodiamond particles in a dispersion medium such as water or an organic solvent.

In recent years, a method has been reported in which a modifying group containing a polyglycerin chain is introduced into the surface of a nanodiamond particle for the purpose of suppressing aggregation of the nanodiamond and improving dispersibility in water (Patent Documents 1 and 2).

### Citation List

### Patent Documents

Patent Document 1: JP 2010-248023 A
Patent Document 2: JP 2012-82103 A

### Summary of Invention

### Technical Problem

The DLS method is known as a method for evaluating the dispersibility of a nanodiamond aqueous dispersion. When a known nanodiamond aqueous dispersion is evaluated by the DLS method, a result may be obtained in which the dispersed particle size of the nanodiamond particles is small and the dispersion has high dispersibility. However, even in such a nanodiamond aqueous dispersion, clustered or chained nanodiamond particles may be present. Therefore, there is a demand for a nanodiamond aqueous dispersion in which nanodiamond particles are more highly dispersed than ever before.

An object of the present disclosure is to provide a nanodiamond aqueous dispersion in which nanodiamond particles can be present in water in a highly dispersed state.

### Solution to Problem

That is, the present disclosure provides a nanodiamond aqueous dispersion including water and nanodiamond particles dispersed in the water,
wherein
a content of heavy metal is 1 part by mass or less with respect to 100 parts by mass of the nanodiamond particles, and
a horizontal projection area of the nanodiamond particles calculated from an analysis image obtained by low-temperature electron microscopy satisfies at least one condition selected from the group consisting of (a) to (d):
   (a) a percentage of 100 nm² or more is 20% or less;
   (b) a percentage of 80 nm² or more is 24% or less;
   (c) a percentage of 50 nm² or more is 30% or less;
   (d) a percentage of 30 nm² or more is 39% or less.

The nanodiamond aqueous dispersion preferably further includes a metal salt.

The metal salt is preferably a light metal salt.

The metal salt is preferably an alkali metal salt.

The nanodiamond particles preferably include a surface-modifying group containing a hydrophilic polymer chain.

The hydrophilic polymer chain is preferably a polyglycerin chain.

The nanodiamond particles preferably have a zeta potential from -12 to +20 mV.

The zeta potential of the nanodiamond particles is preferably more than 0 mV and less than or equal to +20 mV.

### Advantageous Effects of Invention

In the nanodiamond aqueous dispersion of the present disclosure, nanodiamond particles can be stably present in water in a highly dispersed state. Thus, in the nanodiamond aqueous dispersion of the present disclosure, nanodiamond particles having high dispersibility without clustered or chained nanodiamond particles can be stably present in water even when the dispersibility is evaluated by low-temperature electron microscopy.

### Brief Description of Drawings

FIG. 1(a) is a TEM image of nanodiamond particles obtained by low-temperature electron microscopy in a nanodiamond aqueous dispersion of Example 1, and FIG. 1(b) is a binarized image.
FIG. 2 is a graph showing a distribution (particle size distribution) of a horizontal projection area of nanodiamond particles obtained by low-temperature electron microscopy in the nanodiamond aqueous dispersion of Example 1.
FIG. 3(a) is a TEM image of nanodiamond particles obtained by low-temperature electron microscopy in a nanodiamond aqueous dispersion of Comparative Example 1, and FIG. 3(b) is a binarized image.
FIG. 4 is a graph showing a distribution (particle size distribution) of a horizontal projection area of nanodiamond particles obtained by low-temperature electron microscopy in the nanodiamond aqueous dispersion of Comparative Example 1.
FIG. 5(a) is a TEM image of nanodiamond particles obtained by low-temperature electron microscopy in a nanodiamond aqueous dispersion of Comparative Example 2, and FIG. 5(b) is a binarized image.
FIG. 6 is a graph showing a distribution (particle size distribution) of a horizontal projection area of nanodiamond particles obtained by low-temperature electron microscopy in the nanodiamond aqueous dispersion of Comparative Example 2.

### Description of Embodiments

### Nanodiamond Aqueous Dispersion

The present disclosure is a nanodiamond aqueous dispersion including water and nanodiamond particles dispersed in the water,
wherein
a content of heavy metal is 1 part by mass or less with respect to 100 parts by mass of the nanodiamond particles, and
a horizontal projection area of the nanodiamond particles calculated from an analysis image obtained by low-temperature electron microscopy satisfies at least one condition selected from the group consisting of (a) to (d):
   (a) a percentage of 100 nm² or more is 20% or less;
   (b) a percentage of 80 nm² or more is 24% or less;
   (c) a percentage of 50 nm² or more is 30% or less;
   (d) a percentage of 30 nm² or more is 39% or less.

In the nanodiamond aqueous dispersion of the present disclosure, when a horizontal projection area of the nanodiamond particles calculated from an analysis image obtained by low-temperature electron microscopy satisfies at least one selected from the group consisting of (a) to (d) above, highly dispersible nanodiamond particles can be stably present in water without clustered or chained nanodiamond particles.

From the viewpoint of imparting high dispersibility to the nanodiamond particles, the nanodiamond aqueous dispersion of the present disclosure preferably satisfies at least two conditions selected from the group consisting of (a) to (d) (for example, (a) and (b), (a) and (c), (a) and (d), (b) and (c), (b) and (d), and (c) and (d)), more preferably satisfies at least three conditions selected from the group consisting of (a) to (d) (for example, (a), (b), and (c); (a), (b), and (d); (b), (c), and (d)), and still more preferably satisfies all the conditions of (a) to (d).

With regard to (a), the percentage of the nanodiamond particles having a horizontal projection area of 100 nm² or more is not particularly limited as long as it is 20% or less, and is, for example, preferably 15% or less, more preferably 12% or less, still more preferably 10% or less, still more preferably 5% or less, and particularly preferably 2% or less. With regard to (b), the percentage of the nanodiamond particles having a horizontal projection area of 80 nm² or more is not particularly limited as long as it is 24% or less, and is, for example, preferably 16% or less, more preferably 12% or less, still more preferably 8% or less, and particularly preferably 4% or less. With regard to (c), the percentage of the nanodiamond particles having a horizontal projection area of 50 nm² or more is not particularly limited as long as it is 30% or less, and is, for example, preferably 20% or less, more preferably 15% or less, still more preferably 10% or less, and particularly preferably 7% or less. With regard to (d), the percentage of the nanodiamond particles having a horizontal projection area of 30 nm² or more is not particularly limited as long as it is 39% or less, and is, for example, preferably 35% or less, more preferably 30% or less, still more preferably 25% or less, and particularly preferably 20% or less. When (a) to (d) are within the above ranges, there is a tendency that nanodiamond particles having high dispersibility can be stably present in water.

The content of the nanodiamond particles in the nanodiamond aqueous dispersion of the present disclosure is not particularly limited, and is, for example, preferably from 0.1 mass ppm to 10 mass%, more preferably from 0.5 mass ppm to 5 mass%, and still more preferably from 1.0 mass ppm to 3 mass%. The content ratio of the nanodiamond particles can be calculated from the absorbance at 350 nm. When the content ratio of the nanodiamond particles is low (for example, 2000 mass ppm or less), a compound that modifies the surface of the nanodiamond particles is detected by high frequency inductively coupled plasma atomic emission spectrometry (ICP atomic emission spectrometry), and the content ratio of the nanodiamond particles may also be determined based on the detected amount.

The nanodiamond aqueous dispersion of the present disclosure contains nanodiamond particles in a highly dispersed state. The median size (particle size D50) of the nanodiamond particles in the nanodiamond aqueous dispersion of the present disclosure is, for example, 100 nm or less, preferably 60 nm or less, more preferably 50 nm or less, and still more preferably 30 nm or less. The lower limit of the median size of the nanodiamond particles is 5 nm, for example.

In the nanodiamond aqueous dispersion of the present disclosure, the zeta potential of the nanodiamond particles is, for example, preferably from -15 to +20 mV, more preferably from -12 to +20 mV, still more preferably from -10 to + 15 mV, and particularly preferably from -5 to +10 mV. When the zeta potential of the nanodiamond particles is within the above range, the nanodiamond particles having high dispersibility tend to be stably present in water. In particular, when the zeta potential of the nanodiamond particles is positive, more specifically, more than 0 mV and less than equal to +20 mV, the nanodiamond particles tend to be present in water in a highly dispersed state in the nanodiamond aqueous dispersion liquid of the present disclosure. It has been supposed that a high zeta potential in a known nanodiamond aqueous dispersion would lead to a high dispersion of nanodiamond particles. However, it was surprisingly found that the nanodiamond particles exhibit high dispersibility without aggregating even when the zeta potential takes a value close to 0. It is conceivable that this may be due to surface modification of the nanodiamond particles. The zeta potential of the nanodiamond particles can be measured by, for example, laser Doppler electrophoresis.

### Nanodiamond Particles

The nanodiamond particles in the nanodiamond aqueous dispersion of the present disclosure preferably include primary particles of the nanodiamond particles. the nanodiamond particles may include secondary particles in which a plurality of the primary particles are aggregated (adhered).

As the nanodiamond particles, for example, a detonation nanodiamond (that is, nanodiamond produced by a detonation method) or a high-temperature high-pressure nanodiamond (that is, nanodiamond produced by a high-temperature high-pressure method) may be used. Of these, a detonation nanodiamond is preferred in that dispersibility in a dispersion medium is even better, that is, in that primary particles have a particle size of a single-digit nanometer.

Examples of the detonation nanodiamond include an air-cooled detonation nanodiamond (that is, nanodiamond produced by an air-cooled detonation method) and a water-cooled detonation nanodiamond (that is, nanodiamond produced by a water-cooled detonation method). Of these, an air-cooled detonation nanodiamond is preferred in that primary particles are smaller than those of a water-cooled detonation nanodiamond.

The nanodiamond particles may be unmodified nanodiamond particles or nanodiamond particles having a surface-modifying group (it may be referred to as "surface-modified nanodiamond (particles)"). When the nanodiamond particles are surface-modified nanodiamond particles, from the viewpoint of improving the dispersibility of the nanodiamond particles in water, it is preferable that the nanodiamond particles have a surface-modifying group containing a hydrophilic polymer chain. The nanodiamond particles may have one or two or more types of functional groups other than the surface-modifying group containing a hydrophilic polymer chain. Examples of the functional group include an amino group, a hydroxyl group, and a carboxyl group.

Examples of the hydrophilic polymer chain include a polymer chain including a structural unit derived from a monomer having a hydrophilic group, such as a polyether chain (e.g., polyethylene oxide, polypropylene oxide, and copolymers thereof) and a polyglycerin chain (e.g., C₃H₆O(CH₂CH(OH)CH₂O)n-H). Of these, a polyglycerin chain is preferable from the viewpoint of dispersion stability in water. That is, the hydrophilic polymer chain is preferably a polyglycerin chain. The nanodiamond particles of the present disclosure may contain only one type or two or more types of the hydrophilic polymer chains as the surface-modifying group.

The polyglycerin chain is preferably a polyglycerin chain represented by the following formula (1).

-(X¹C₃H₅)-(OC₃H₅)p-(X²R¹)q (1)

In Formula (1), p represents an integer of 1 or more, and q represents an integer satisfying q = p + 2. X¹ represents a divalent group, the dangling bond extending to the left from X¹ in [X₁C₃H₅] binds to the nanodiamond particle. [X²R¹] represents a terminal of the polyglycerin chain, X² represents a single bond or a divalent group, and R¹ represents a hydrogen atom or a monovalent organic group.

[X¹C₃H₅] in Formula (1) is represented by [-X¹-CH₂-C(-)H-CH₂-]. X¹ in [X₁C₃H₅] binds to the nanodiamond particles and two C bind to O in [OC₃H₅] or X² in [X²R¹], respectively. X¹ in [X₁C₃H₅] represents a divalent group.

Examples of the divalent group in X¹ include an amino group (-NR^{a}-), an amide group (-NR^{a-}C(=O)-), an ether bond (-O-), an ester bond (-O-C(=O)-), a phosphinic acid group (-PH(= O)O-), a phosphonic acid group (-P(-OH)(=O)O-), a phosphoric acid ester (-O-P(=O)(OH)-O-), a sulfide bond (-S-), a carbonyl group (-C(=O)-), a urethane bond (-R^{a}N-C(=O)-O-), an imide bond (-C(=O)-NR^{a}-C(=O)-), a thiocarbonyl group (-C(=S)-), a siloxane bond (-Si-O), a sulfuric acid ester group (-O-S(=O)₂-O-), a sulfonyl group (-S(=O)₂-O-), a sulfone group (-S(=O)₂-), a sulfoxide (-S(=O)-), and a group produced by bonding two or more of these groups. In an asymmetric divalent group, the direction of the divalent group with respect to the nanodiamond side or the R side is not limited. The R^{a} represents a hydrogen atom or a monovalent organic group. Of these, as the divalent group, -NR^{a}-, -O-, -C(=O)O-, - NR^{a-}C(=O)-, -PH(=O)O-, or -S- is preferable, and -NR^{a}-, -O-, -NR^{a-}C(=O)-, or - C(=O)O- is more preferable.

[OC₃H₅] with p in Formula (1) is a structure derived from glycerin represented by [-O-CH₂-C(-)H-CH₂-], and forms a polyglycerin chain together with [X¹C₃H₅]. p represents a repeating unit of [OC₃H₅], and is an integer of 1 or more, preferably from 3 to 2000, more preferably from 5 to 500, and still more preferably from 10 to 200. p may be the same or different in the group containing a plurality of polyglycerin chains.

In Formula (1), [X²R¹] represents a terminal of a polyglycerin chain, and is bonded to C in [X₁C₃H₅] or C in [OC₃H₅]. R¹ represents a hydrogen atom or a monovalent organic group.

X² in [X²R¹] represents a single bond or a divalent group. Examples of the divalent group include the divalent group exemplified and described as X¹ in [X₁C₃H₅] described above. R^{a} and R¹ in X² may be bonded to each other to form a ring. Of these, X² is preferably -NR^{a}-, -NR^{a}C(=O)-, -O-, -C(=O)O-, -O-C(=O)-, - PH(=O)O-, -O-P(=O)(OH)-O-, -S-, -O-S(=O)₂-O-, or -O-S(=O)₂-, more preferably - NR^{a}- or -O-. X¹ in [X₁C₃H₅] and X² in [X²R¹] may be the same or different. The plurality of [X²R¹] may be the same or different. X² in [X²R¹] may be the same or different in the group containing a plurality of polyglycerin chains. q represents an integer of 3 or more, and the value thereof depends on the value of p and satisfies q = p + 2. q may be the same or different in the group containing a plurality of polyglycerin chains.

Examples of the monovalent organic group in R¹ include a substituted or unsubstituted hydrocarbon group (a monovalent hydrocarbon group, in particular a monovalent aliphatic or aromatic hydrocarbon group), a substituted or unsubstituted heterocyclic group (monovalent heterocyclic group), and a group produced by bonding two or more of the monovalent hydrocarbon group and/or the monovalent heterocyclic group. The bonded groups may be directly bonded or may be bonded via a linking group. Examples of the linking group include an amino group, an ether bond, an ester bond, a phosphinic acid group, a sulfide bond, a carbonyl group, an organic group-substituted amide group, an organic group-substituted urethane bond, an organic group-substituted imide bond, a thiocarbonyl group, a siloxane bond, and a group produced by bonding two or more of those listed above. When R¹ is a monovalent organic group, a plurality of R¹ in Formula (1) may be the same or different.

Examples of the monovalent organic group in R^{a} include those exemplified and described as the monovalent organic group in R¹. Specifically, examples of the monovalent organic group include a substituted or unsubstituted hydrocarbon group (monovalent hydrocarbon group), a substituted or unsubstituted heterocyclic group (monovalent heterocyclic group), and a group produced by bonding two or more of these groups. The monovalent organic group may have an ionic form. The bonded groups may be directly bonded or may be bonded via a linking group. The hydrocarbon group in the substituted or unsubstituted hydrocarbon group is preferably an alkyl group, more preferably an alkyl group having from 1 to 18 carbons, still more preferably an alkyl group having from 1 to 6 carbons, and particularly preferably an ethyl group, a propyl group, a butyl group, or a hexyl group.

Specific examples of [X²R¹] include OH, NH₂, CH₃, an alkoxy group, an acyl group, a mono- or dialkylamino group, a mono- or dialkenylamino group, an alkylamide group, an alkenylamide group, a quaternary ammonium-substituted alkoxy group, a chlorine-substituted alkoxy group, a polyalkylene oxide group, a cyclic imide group, a carboxyl-substituted alkylamino group, and a carboxyl-substituted alkyloxy group. Two or more [X²R¹] may form a ring via R¹. Of these, OH, a cyclic imide group, and a carboxyl-substituted alkylamino group are preferable from the viewpoint of more excellent water dispersibility of the surface-modified nanodiamond.

The number-average degree of polymerization of glycerin in the polyglycerin chain is preferably from 3 to 2000, more preferably from 5 to 500, and still more preferably from 10 to 200. When the number-average degree of polymerization is large, the repulsive force between the nanodiamond sufficiently acts, which can further improve the dispersibility of the nanodiamond particles. When the number-average degree of polymerization is 5000 or less, entanglement of polyglycerin chains between the nanodiamond is reduced, which can further improve the dispersibility of the nanodiamond particles in water. The number-average degree of polymerization is defined as the number of glycidol units constituting a polyglycerin chain in a group bonded to one surface functional group of the raw material nanodiamond. The number of surface functional groups of the raw material nanodiamond may be determined by element analysis or acid number measurement on the raw material nanodiamond, or by these techniques in combination.

When the nanodiamond particles have a surface-modifying group, the mass ratio of the nanodiamond particles to the surface-modifying group [nanodiamond particles/surface-modifying group] is not particularly limited, and is preferably from 0.5 to 1.0, and more preferably from 0.6 to 0.8. When the mass ratio is 0.5 or more (in particular, 0.6 or more), the properties as a nanodiamond material are hardly impaired. When the mass ratio is 1.0 or less (in particular, 0.8 or less), the modification degree of the surface-modifying group becomes sufficient, and dispersibility in water is more excellent. The mass ratio can be determined based on a weight loss rate as measured by a thermogravimetric analysis, with the weight loss being considered as the mass of the polyglycerin chain-containing surface-modifying group.

When the nanodiamond particles have a surface-modifying group containing a polyglycerin chain, the nanodiamond particles can be produced by ring-opening polymerization of glycidol directly to the nanodiamond particles. The nanodiamond particles inherently have carboxyl groups and hydroxyl groups generated in the production process, and the surface of the nanodiamond can be modified with a polyglycerin chain by reacting these functional groups with glycidol.

The reaction (ring-opening polymerization) between the nanodiamond particles and glycidol may be performed, for example, by adding glycidol and a catalyst to the nanodiamond particles in an inert gas atmosphere and heating the mixture to a temperature from 50 to 100°C. An acidic catalyst or a basic catalyst can be used as the catalyst. Examples of the acidic catalyst include boron trifluoride etherate, acetic acid, and phosphoric acid. Examples of the basic catalyst include triethylamine, pyridine, dimethylaminopyridine, and triphenylphosphine.

Conditions of ring-opening polymerization of glycidol can be referred to: S. R. Sandler et al., J. Polym. Sci., Polym. Chem. Ed., Vol. 4, 1253 (1966); E. J. Vanderberg, J. Polym. Sci., Polym. Chem. Ed., vol. 23, 915 (1985); and G. R. Newcome et al., Dendritic Macromolecules: Concepts, Syntheses, Perspectives, VCH, Weinheim (1996).

The surface-modified nanodiamond may also be produced by ring-opening polymerization of glycidol on nanodiamond particles whose surfaces are introduced with a functional group containing active hydrogen. The functional group containing active hydrogen is not limited, and examples thereof include an amino group, a hydroxyl group, a carboxyl group, a mercapto group (a thiol group), and a phosphinic acid group. A method for introducing the functional group containing active hydrogen into nanodiamond particles may be referred to, for example, JP 2012-82103 A and JP 2010-248023 A. The ring-opening polymerization of glycidol on the nanodiamond particles whose surfaces are introduced with a functional group containing active hydrogen may be performed in the same manner as the ring-opening polymerization of glycidol on the nanodiamond particles described above.

### Metal Salt

The nanodiamond aqueous dispersion of the present disclosure is not particularly limited as long as it contains water and nanodiamond particles dispersed in the water, and may further contain a metal salt (for example, a light metal salt and/or a heavy metal salt). One type of metal salt may be used or two or more types of metal salts may be used in combination.

The metal element constituting the metal salt is not particularly limited, and examples thereof include light metal elements such as aluminum, magnesium, beryllium, alkali metals, and alkaline earth metals; and heavy metal elements such as iron, lead, gold, silver, copper, chromium, zinc, manganese, nickel, molybdenum, and tin. Specific examples of the metal salt include sulfides, hydroxides, halides (such as fluorides, chlorides, bromides, and iodides), sulfates, and organic acid salts (such as acetates) containing the above-described metal elements. Of these, as the metal salt, a light metal salt is preferable, an alkali metal salt and an alkaline earth metal salt are more preferable, and an alkali metal salt is still more preferable.

Examples of the alkali metal salt include sodium chloride, potassium chloride, sodium nitrate, potassium nitrate, and sodium acetate, and sodium chloride is particularly preferable from the viewpoint of dispersion stability in water and ease of handling.

The concentration of the metal salt is not particularly limited, and is, for example, preferably from 1.0 × 10⁻⁶ to 2.0 M, more preferably from 5.0 × 10⁻⁵ to 1.0 M, and still more preferably from 1.0 × 10⁻⁵ to 5.0 × 10⁻¹ M. When the concentration of the metal salt is within the above range, the dispersion stability in water is improved, and the dispersibility of the nanodiamond particles tends to be improved to such an extent that no cluster or chain is observed even when the dispersibility is evaluated with low-temperature electron microscopy. However, the content of the heavy metal in the nanodiamond aqueous dispersion of the present disclosure is 1 part by mass or less, preferably 0.1 part by mass or less, and more preferably 0.01 part by mass or less with respect to 100 parts by mass of the nanodiamond particles.

### Other Components

The nanodiamond aqueous dispersion of the present disclosure may further contain components other than water, nanodiamond particles, and light metal salts. Examples of such a component (hereinafter, it may be referred to as "other components") include a dispersion medium other than water, a surfactant, a thickener, a coupling agent, a dispersant, a rust inhibitor, a corrosion inhibitor, a freezing point depressant, an antifoaming agent, an antiwear additive, an antiseptic agent, and a colorant.

Examples of the dispersion medium other than water include an organic solvent and an ionic liquid. One type of such a dispersion medium may be used or two or more types may be used in combination. Examples of the organic solvent mentioned above include aliphatic hydrocarbons, such as hexane, heptane, and octane (in particular, linear saturated aliphatic hydrocarbons); aromatic hydrocarbons, such as benzene, toluene, and xylene; alicyclic hydrocarbons, such as cyclohexane and methylcyclohexane; aprotic polar solvents, such as dimethylformamide (DMF), dimethylacetamide, N-methylpyrrolidone, and dimethyl sulfoxide; alcohols, such as methanol; halogenated hydrocarbons, such as chloroform, dichloromethane, dichloroethane, carbon tetrachloride, chlorobenzene, and trifluoromethylbenzene; chain or cyclic ethers, such as diethyl ether, diisopropyl ether, dimethoxyethane, tetrahydrofuran (THF), and dioxane; esters, such as ethyl acetate and butyl acetate; chain ketones, such as methyl ethyl ketone (MEK) and methyl isobutyl ketone; and nitriles such as acetonitrile.

In the nanodiamond aqueous dispersion of the present disclosure, the content of water with respect to 100 mass% of the dispersion medium is not particularly limited, and is preferably 90 mass% or greater, more preferably 95 mass% or greater, still more preferably 99 mass% or greater, and particularly preferably 99.9 mass% or greater.

As a method for evaluating the dispersibility of a nanodiamond aqueous dispersion, a DLS method and low-temperature electron microscopy are known. When a known nanodiamond aqueous dispersion is evaluated by the DLS method, a result may be obtained in which the dispersed particle size of the nanodiamond particles is small and the dispersion has high dispersibility. However, when dispersibility of a known nanodiamond aqueous dispersion is evaluated by low-temperature electron microscopy, there have been cases where clustered or chained nanodiamond particles are present. That is, the evaluation by the low-temperature electron microscopy suggests that there is a possibility that a known nanodiamond aqueous dispersion does not actually have desired high dispersibility although it seems to have high dispersibility in the evaluation using the DLS method.

Although the reason of different evaluations of the dispersibility of the nanodiamond particles between the DLS method and the low-temperature electron microscopy is not clear, it can be said that the low-temperature electron microscopy has high reliability from the viewpoint of the evaluation of the dispersibility of the nanodiamond particles, and thus, it can be said that the water dispersibility of the nanodiamond particles in a known nanodiamond aqueous dispersion is insufficient. In the nanodiamond aqueous dispersion of the present disclosure, the nanodiamond particles can be present in water in a highly dispersed state without clustered or chained nanodiamond particles even in evaluation by the low-temperature electron microscopy.

The nanodiamond aqueous dispersion of the present disclosure may be preferably used, for example, as an additive for a composite material that imparts properties (e.g., mechanical strength, high refractive index, thermal conductivity, insulating properties, antioxidant properties, crystallization promoting action, and dendrite reduction action) of fine nanodiamond particles to a resin or the like (e.g., a thermosetting or photocurable resin or a thermoplastic resin). A composition produced by adding the nanodiamond aqueous dispersion of the present disclosure to a resin may be preferably used as, for example, a functional hybrid material, a thermally functional (e.g., heat resistant, heat storing, thermo-electrically conductive, and heat insulating) material, a photonic material (e.g., an organic EL element, an LED, a liquid crystal display, and an optical disk), a bio/biocompatible material, a coating material, a film material (e.g., a hard coating film for touch screens and various displays, and a thermal barrier film), a sheet material, a screen material (e.g., a transmission type transparent screen), a filler material (e.g., a filler for heat radiation or for improving mechanical properties), a heat resistant plastic substrate material (e.g., a substrate for flexible displays), and a material for lithium ion batteries. In addition, the nanodiamond aqueous dispersion of the present disclosure may also be used as an antifriction agent or a lubricant to be applied to medical applications, sliding parts of machine parts (e.g., automobiles and aircraft), and the like.

Each aspect disclosed in the present specification can be combined with any other feature disclosed herein. Note that each of the configurations, combinations thereof, or the like in each of the embodiments are examples, and additions, omissions, replacements, and other changes to the configurations may be made as appropriate without departing from the spirit of the present disclosure. In addition, each aspect of the invention according to the present disclosure is not limited by the embodiments or the following examples but is limited only by the claims.

### Examples

An embodiment of the present disclosure will be described in further detail below based on examples.

### Example 1

A nanodiamond aqueous dispersion was produced through the following steps.

### Production of Nanodiamond

First, the formation of nanodiamonds by a detonation method was performed. In the present formation, first, a molded explosive attached with an electric detonator was placed inside a pressure-resistant vessel for detonation, and the vessel was sealed. The vessel was made of iron and had a capacity of 15 m³. As the explosive, 0.50 kg of a mixture of TNT and RDX was used. The mass ratio of TNT to RDX (TNT/RDX) in the explosive was 50/50. The electric detonator was then triggered to detonate the explosive in the vessel (formation of nanodiamond by detonation method). Then, the vessel was allowed to stand at room temperature for 24 hours to lower the temperatures of the vessel and its interior. After the cooling, a nanodiamond crude product (containing the agglutinate of the nanodiamond particles and soot formed in the above detonation method), which adhered to the inner wall of the container, was scraped off with a spatula, and the nanodiamond crude product was thereby collected.

The nanodiamond crude product produced by performing the formation as described above multiple times was then subjected to an acid treatment. Specifically, a slurry produced by adding 6 L of a 10% by mass hydrochloric acid to 200 g of the nanodiamond crude product was subjected to a heat treatment under reflux at normal pressure conditions for 1 hour. The heating temperature in this acid treatment was from 85 to 100°C. Then, after cooling, the solid content (containing the nanodiamond agglutinates and soot) was washed with water by decantation. The solid content was repeatedly washed with water by decantation until the pH of a precipitate solution reached 2 from the low pH side.

An oxidation treatment was then performed. Specifically, 6 L of 98% by mass sulfuric acid and 1 L of 69% by mass nitric acid were added to the precipitate solution (containing the nanodiamond agglutinate) produced through decantation after the acid treatment to form a slurry, and then the slurry was subjected to heat treatment under reflux at normal pressure conditions for 48 hours. The heating temperature in this oxidation treatment was from 140 to 160°C. Then, after cooling, the solid content (containing the nanodiamond agglutinates) was washed with water by decantation. The initial supernatant liquid from the water washing was colored, and thus washing of the solid content with water by decantation was repeated until the supernatant liquid became visually transparent.

Next, the precipitate solution (the solution containing the nanodiamond agglutinate) produced through the water-washing treatment described above was subjected to drying to produce a dry powder (nanodiamond agglutinate). Evaporation to dryness performed with the use of an evaporator was employed as a technique for the drying treatment in the drying.

Next, 4.5 g of the dry powder (nanodiamond agglutinates) produced through the drying described above was allowed to stand inside a furnace core tube of a gas atmosphere furnace (trade name "Gas Atmosphere Tube Furnace KTF045N1", available from Koyo Thermo Systems Co., Ltd.), and nitrogen gas was continuously provided through the furnace core tube at a flow rate of 1 L/min for 30 minutes. Then, the flowing gas was switched from nitrogen to a mixed gas of oxygen and nitrogen, and the mixed gas was continuously provided through the furnace core tube at a flow rate of 1 L/min. The oxygen concentration in the mixed gas was 4 vol.%. After switching to the mixed gas, the temperature inside the furnace was raised to a temperature set for heating of 400°C. The temperature was raised at a rate of 10°C/min to 380°C, a temperature 20°C lower than the temperature set for heating, and then at a rate of 1°C/min from 380°C to 400°C. The oxygen oxidation treatment was then performed on the nanodiamond powder in the furnace while maintaining the temperature condition inside the furnace at 400°C. The duration of the treatment was 3 hours.

Next, hydrogenation was performed using the gas atmosphere furnace described above. Specifically, the nanodiamond powder that had been subjected to oxygen oxidation was placed inside the gas atmosphere furnace, and nitrogen gas was continuously provided through at a flow rate of 1 L/minute for 30 minutes. Then, the flowing gas was switched from nitrogen to a mixed gas of hydrogen and nitrogen, and the mixed gas was continuously provided through the furnace core tube at a flow rate of 1 L/minute. The hydrogen concentration in the mixed gas was 2 vol.%. After switching to the mixed gas, the temperature inside the furnace was raised to a temperature set for heating of 600°C. The temperature rising rate was 10°C/minute. The hydrogenation treatment was then performed on the nanodiamond powder in the furnace while maintaining the temperature condition inside the furnace at 600°C. The duration of the treatment was 5 hours. A nanodiamond powder subjected to hydrogenation treatment was thus produced.

The disintegration was then performed. Specifically, first, 0.9 g of the nanodiamond powder subjected to the hydrogenation and 29.1 mL of pure water were put into a 50 mL sample bottle and mixed to produce about 30 mL of a slurry. After adjusting the pH to 4 with 1N hydrochloric acid, the slurry was subjected to an ultrasonic treatment. In the ultrasonic treatment, the slurry was subjected to ultrasonic irradiation for 2 hours using an ultrasonic irradiator (trade name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 mL of the slurry after the ultrasonic irradiation and zirconia beads with a diameter of 30 µm were charged in a vessel (available from Aimex Co., Ltd.), which was a mill vessel having a capacity of 100 mL, and the vessel was sealed. Then, the apparatus was operated to perform bead milling. In this bead milling, the amount of zirconia beads that were charged was, for example, 33 vol.% of the capacity of the mill vessel, the rotational speed of the mill vessel was 2570 rpm, and the duration of the milling was 2 hours.

Next, the slurry having undergone the disintegration as described above was subjected to centrifugation treatment (classification operation) using a centrifuge. The centrifugal force in this centrifugation treatment was 20000 xg, and the duration of the centrifugation was 10 minutes. Next, 10 mL of supernatant of the nanodiamond-containing solution that had been subjected to this centrifugation treatment was collected. A nanodiamond aqueous dispersion in which nanodiamond was dispersed in pure water was thus produced. This nanodiamond aqueous dispersion had a solid content concentration of 2.1 mass% and a pH of 5.40. The median size (particle size D50) of the nanodiamond aqueous dispersion produced as described above ("nanodiamond aqueous dispersion" in Comparative Example 2 described below) was 5.0 nm.

Next, the nanodiamond aqueous dispersion produced through the disintegration was dried using an evaporator, resulting in a black dry powder. The resulting dry powder (100 mg) was added to 12 mL of glycidol placed in a glass reactor, ultrasonicated in an ultrasonic cleaner (trade name "BRANSON 2510", available from Marshall Scientific LLC.) at room temperature for 2 hours, and dissolved. This solution was allowed to react at 140°C for 20 hours while it was being stirred under a nitrogen atmosphere. The reaction mixture was cooled; then, after 120 mL of methanol was added, the reaction mixture was ultrasonicated and then centrifuged at 50400 xg for 2 hours, resulting in a precipitate. To this precipitate, 120 mL of methanol was added, and the ultrasonification-centrifugation is repeated five times in the same manner. The precipitate was finally dialyzed with pure water using a dialysis membrane (Spectra/Prodialysis membrane, MWCO of 12 to 14 kDa) to replace residual methanol with water and lyophilized, and the nanodiamond particles modified with polyglycerin (PG-ND particles) was produced as a gray powder. The ratio of nanodiamond particle to surface-modifying group measured by a TG-DTA thermal analysis, or nanodiamond particle : surface-modifying group, was 1 : 1.39.

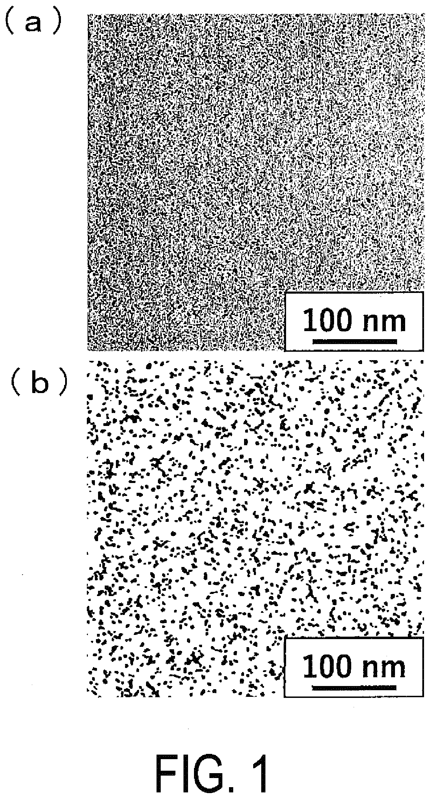

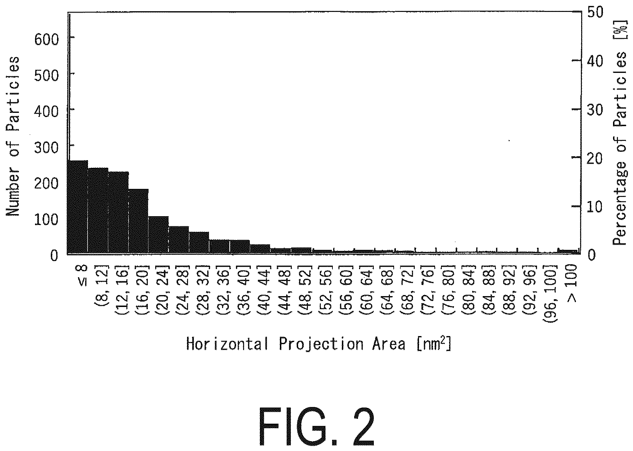

To 100 mL of an aqueous dispersion of the PG-ND particles, 1 mL of 1 M NaCl aqueous solution was added so that the final NaCl concentration was 0.01 M, and the mixture was subjected to ultrasonic treatment for 10 minutes to produce an intended nanodiamond aqueous dispersion. The content of the nanodiamond particles was 1 mass%. The content of the nanodiamond particles was calculated by drying the nanodiamond aqueous dispersion, collecting a solid content, and analyzing the solid content by TG-DTA. The zeta potential in the nanodiamond aqueous dispersion was 4.89 mV. A horizontal projection area of the nanodiamond aqueous dispersion was calculated by low-temperature electron microscopy (Cryo-TEM method, cryo-electron microscopy). As a specific operation, the nanodiamond aqueous dispersion was frozen with liquid nitrogen, and a TEM image was obtained using an electronic microscope (Krios G4, manufactured by Thermo Fisher Scientific Inc.) (FIG. 1 (a)). The obtained TEM image was analyzed with Image J (particle size analysis software), and a horizontal projection area (FIG. 2) was calculated from a binarized image (FIG. 1(b)). The results are listed in Table 1.

### Comparative Example 1

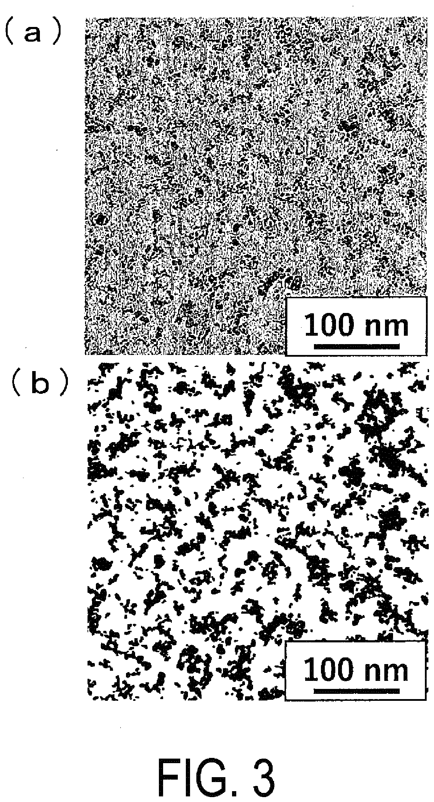

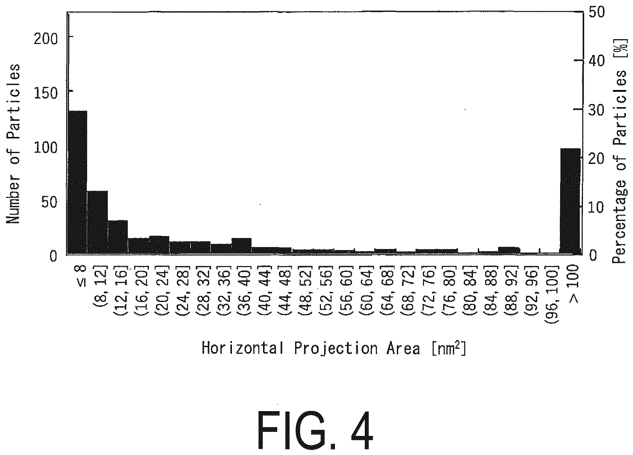

A TEM image (FIG. 3(a)) of a nanodiamond aqueous dispersion prepared in the same manner as in Example 1 except that no 1 M NaCl aqueous solution was used was obtained by low-temperature electron microscopy, and a horizontal projection area (FIG. 4) was calculated from a binarized image (FIG. 3(b)) of the TEM image. The results are listed in Table 1.

### Comparative Example 2

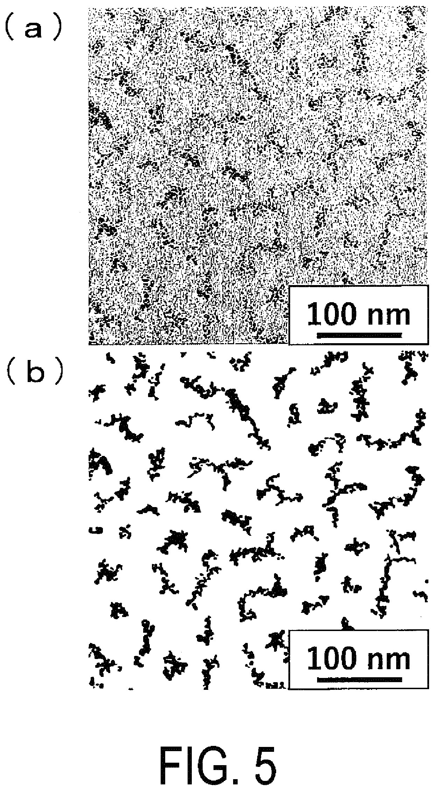

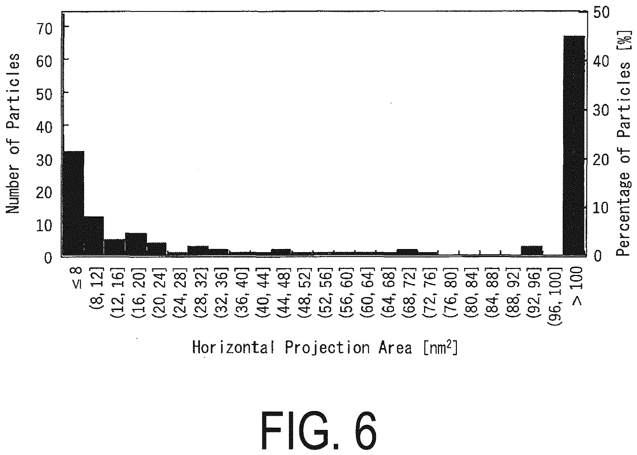

A nanodiamond (unmodified with polyglycerin) aqueous dispersion described in Example 1 was prepared, a TEM image (FIG. 5(a)) was obtained by low-temperature electron microscopy, and a horizontal projection area (FIG. 6) was calculated from a binarized image (FIG. 5(b)) of the TEM image. The results are listed in Table 1.

**[Table 1]**

| | Percentage of projected area | | |
|---|---|---|---|
| Division of projected area (nm²) | Example 1 | Comparative Example 1 | Comparative Example 2 |
| 100 nm² or more | 0.68% | 21.90% | 45.27% |
| 80 nm² or more (including 100 nm² or more) | 1.58% | 24.38% | 47.30% |
| 50 nm² or more (including 80 nm² or more) | 5.48% | 30.02% | 52.70% |
| 30 nm² or more (including 50 nm² or more) | 16.37% | 39.95% | 58.11% |

### Particle Size D50

The median sizes (particle sizes D50) of the nanodiamond particles in the nanodiamond aqueous dispersions according to the Example and Comparative Examples produced in the manners described above, were measured from the nanodiamond particle size distributions determined by a dynamic light scattering method. Specifically, the nanodiamond particle size distributions were measured by a dynamic light scattering method (non-contact backscattering method) with the use of an instrument (trade name "Zetasizer Nano ZS") available from Malvern Panalytical Ltd. As a result, the particle size D50 (median size) of the nanodiamond particles in Example 1 was 26.95 nm.

To summarize the above, configurations of the present disclosure and their variations will be described in addition below.
[1] A nanodiamond aqueous dispersion including water and nanodiamond particles dispersed in the water,
   wherein
   a content of heavy metal is 1 part by mass or less with respect to 100 parts by mass of the nanodiamond particles, and
   a horizontal projection area of the nanodiamond particles calculated from an analysis image obtained by low-temperature electron microscopy satisfies at least one condition selected from the group consisting of (a) to (d):
      (a) a percentage of 100 nm² or more is 20% or less;
      (b) a percentage of 80 nm² or more is 24% or less;
      (c) a percentage of 50 nm² or more is 30% or less;
      (d) a percentage of 30 nm² or more is 39% or less.
[2] The nanodiamond aqueous dispersion according to [1], satisfying
   (a) and (b);
   (a) and (c);
   (a) and (d);
   (b) and (c);
   (b) and (d);
   (c) and (d);
   (a), (b), and (c);
   (a), (b), and (d);
   (b), (c), and (d); or
   (a), (b), (c), and (d).
[3] The nanodiamond aqueous dispersion according to [1] or [2], wherein in (a), the percentage of the nanodiamond particles having a horizontal projection area of 100 nm² or more is 15% or less, 12% or less, 10% or less, 5% or less, or 2% or less.
[4] The nanodiamond aqueous dispersion according to any one of [1] to [3], wherein in (b), the percentage of nanodiamond particles having a horizontal projection area of 80 nm² or more is 16% or less, 12% or less, 8% or less, or 4% or less.
[5] The nanodiamond aqueous dispersion according to any one of [1] to [4], wherein in (c), the percentage of nanodiamond particles having a horizontal projection area of 50 nm² or more is 20% or less, 15% or less, 10% or less, or 7% or less.
[6] The nanodiamond aqueous dispersion according to any one of [1] to [5], wherein in (d), the percentage of nanodiamond particles having a horizontal projection area of 30 nm² or more is 35% or less, 30% or less, 25% or less, or 20% or less.
[7] The nanodiamond aqueous dispersion according to any one of [1] to [6], wherein a content of the nanodiamond particles is from 0.1 mass ppm to 10 mass, from 0.5 mass ppm to 5 mass%, or from 1.0 mass ppm to 3 mass%.
[8] The nanodiamond aqueous dispersion according to any one of [1] to [7], wherein the nanodiamond particles have a median size (particle size D50) of 100 nm or less, 60 nm or less, 50 nm or less, or 30 nm or less, or a lower limit of the median size is 5 nm.
[9] The nanodiamond aqueous dispersion according to any one of [1] to [8], wherein the nanodiamond particles have a zeta potential from -15 to +20 mV, from - 12 to +20 mV, from -10 to +15 mV, or from -5 to +10 mV.
[10] The nanodiamond aqueous dispersion according to any one of [1] to [9], wherein the nanodiamond particles have a zeta potential more than 0 mV and less than or equal to +20 mV.
[11] The nanodiamond aqueous dispersion according to any one of [1] to [10], wherein the nanodiamond particles include primary particles of the nanodiamond particles or include secondary particles in which a plurality of the primary particles are aggregated (adhered).
[12] The nanodiamond aqueous dispersion according to any one of [1] to [11], wherein the nanodiamond particles are a detonation nanodiamond.
[13] The nanodiamond aqueous dispersion according to [12], wherein the detonation nanodiamond is an air-cooled detonation nanodiamond or a water-cooled detonation nanodiamond.
[14] The nanodiamond aqueous dispersion according to any one of [1] to [13], wherein the nanodiamond particles are unmodified nanodiamond particles or nanodiamond particles having a surface-modifying group (surface-modified nanodiamond).
[15] The nanodiamond aqueous dispersion according to any one of [1] to [14], wherein the nanodiamond particles have a surface-modifying group containing a hydrophilic polymer chain.
[16] The nanodiamond aqueous dispersion according to [15], wherein the hydrophilic polymer chain is a polyether chain (such as polyethylene oxide, polypropylene oxide, or a copolymer thereof) or a polyglycerin chain (such as C₃H₆O(CH₂CH(OH)CH₂O)n-H).
[17] The nanodiamond aqueous dispersion according to [16], wherein the polyglycerin chain is a polyglycerin chain represented by Formula (1):

   -(X¹C₃H₅)-(OC₃H₅)p-(X²R¹)q (1)

   In Formula (1), p represents an integer of 1 or more, and q represents an integer satisfying q = p + 2. X¹ represents a divalent group, the dangling bond extending to the left from X¹ in [X₁C₃H₅] binds to the nanodiamond particle. [X²R¹] represents a terminal of the polyglycerin chain, X² represents a single bond or a divalent group, and R¹ represents a hydrogen atom or a monovalent organic group.
[18] The nanodiamond aqueous dispersion according to [16] or [17], wherein the polyglycerin chain has a number-average degree of polymerization of glycerin of from 3 to 2000, from 5 to 500, or from 10 to 200.
[19] The nanodiamond aqueous dispersion according to any one of [1] to [18], wherein when the nanodiamond particles have a surface-modifying group, a mass ratio of the nanodiamond particles to the surface-modifying group [nanodiamond particles/surface-modifying group] is from 0.5 to 1.0 or from 0.6 to 0.8.
[20] The nanodiamond aqueous dispersion according to any one of [1] to [19], wherein when the nanodiamond particles have a surface-modifying group containing a polyglycerin chain, the nanodiamond particles are producible by ring-opening polymerization of glycidol directly to the nanodiamond particles.
[21] The nanodiamond aqueous dispersion according to any one of [1] to [20], further including a metal salt.
[22] The nanodiamond aqueous dispersion according to [21], wherein, for a metal element constituting the metal salt, at least one light metal element is selected from the group consisting of aluminum, magnesium, beryllium, an alkali metal, and an alkaline earth metal, or at least one heavy metal element is selected from the group consisting of iron, lead, gold, silver, copper, chromium, zinc, manganese, nickel, molybdenum, and tin.
[23] The nanodiamond aqueous dispersion according to [22], wherein, for the metal salt, at least one metal salt is selected from the group consisting of a sulfide, a hydroxide, a halide (such as fluoride, chloride, bromide, or iodide), a sulfate, and an organic acid salt (such as acetate) containing the metal element.
[24] The nanodiamond aqueous dispersion according to any one of [21] to [23], wherein the metal salt is a light metal salt.
[25] The nanodiamond aqueous dispersion according to any one of [21] to [24], wherein the metal salt is an alkali metal salt or an alkaline earth metal salt.
[26] The nanodiamond aqueous dispersion according to [25], wherein the alkali metal salt is sodium chloride, potassium chloride, sodium nitrate, potassium nitrate, or sodium acetate.
[27] The nanodiamond aqueous dispersion according to any one of [21] to [26], wherein the metal salt has a concentration from 1.0 × 10⁻⁶ to 2.0 M, from 5.0 × 10⁻⁵ to 1.0 M, or from 1.0 × 10⁻⁵ to 5.0 × 10⁻¹ M.
[28] The nanodiamond aqueous dispersion according to any one of [1] to [27], wherein the content of the heavy metal in the nanodiamond aqueous dispersion is 0.1 part by mass or less, or 0.01 part by mass or less, with respect to 100 parts by mass of the nanodiamond particles.
[29] The nanodiamond aqueous dispersion according to any one of [1] to [28], wherein in the nanodiamond aqueous dispersion, a content of water with respect to 100 mass% of a dispersion medium is 90 mass% or greater, 95 mass% or greater, 99 mass% or greater, or 99.9 mass% or greater.

### Industrial Applicability

In the nanodiamond aqueous dispersion of the present disclosure, nanodiamond particles can be stably present in water in a highly dispersed state. Thus, in the nanodiamond aqueous dispersion of the present disclosure, nanodiamond particles having high dispersibility without clustered or chained nanodiamond particles can be stably present in water even when the dispersibility is evaluated by low-temperature electron microscopy.

## Claims

1. A nanodiamond aqueous dispersion comprising water and nanodiamond particles dispersed in the water,
wherein
a content of heavy metal is 1 part by mass or less with respect to 100 parts by mass of the nanodiamond particles, and
a horizontal projection area of the nanodiamond particles calculated from an analysis image obtained by low-temperature electron microscopy satisfies at least one condition selected from the group consisting of (a) to (d):
(a) a percentage of 100 nm² or more is 20% or less;
(b) a percentage of 80 nm² or more is 24% or less;
(c) a percentage of 50 nm² or more is 30% or less;
(d) a percentage of 30 nm² or more is 39% or less.

2. The nanodiamond aqueous dispersion according to claim 1, further comprising a metal salt.

3. The nanodiamond aqueous dispersion according to claim 2, wherein the metal salt is a light metal salt.

4. The nanodiamond aqueous dispersion according to claim 2 or 3, wherein the metal salt is an alkali metal salt.

5. The nanodiamond aqueous dispersion according to claim 1 or 2, wherein the nanodiamond particles include a surface-modifying group containing a hydrophilic polymer chain.

6. The nanodiamond aqueous dispersion according to claim 5, wherein the hydrophilic polymer chain is a polyglycerin chain.

7. The nanodiamond aqueous dispersion according to claim 1 or 2, wherein the nanodiamond particles have a zeta potential from -12 to +20 mV.

8. The nanodiamond aqueous dispersion according to claim 1 or 2, wherein the nanodiamond particles have a zeta potential more than 0 mV and less than or equal to +20 mV.
